(19) **Europäisches Patentamt / European Patent Office / Office européen des brevets**

(11) **EP 3 188 923 B1**

(12) # FASCICULE DE BREVET EUROPEEN

(45) Date de publication et mention de la délivrance du brevet:
**15.05.2019 Bulletin 2019/20**

(21) Numéro de dépôt: **15759913.5**

(22) Date de dépôt: **20.08.2015**

(51) Int Cl.:
*B60L 50/14* (2019.01)   *B60L 1/00* (2006.01)
*B60L 3/00* (2019.01)   *B60L 7/14* (2006.01)
*B60L 15/20* (2006.01)   *B60K 6/28* (2007.10)
*B60K 6/485* (2007.10)   *B60W 30/18* (2012.01)
*H02P 9/10* (2006.01)   *B60L 50/16* (2019.01)
*B60L 58/20* (2019.01)

(86) Numéro de dépôt international:
**PCT/FR2015/052231**

(87) Numéro de publication internationale:
**WO 2016/034790 (10.03.2016 Gazette 2016/10)**

(54) **PROCÉDÉ DE RÉGULATION D' UN GROUPE MOTOPROPULSEUR HYBRIDE ET DISPOSITIF ASSOCIÉ**

VERFAHREN ZUR STEUERUNG EINES HYBRIDANTRIEBSAGGREGATS UND ZUGEHÖRIGE VORRICHTUNG

METHOD FOR CONTROLLING A HYBRID POWER TRAIN AND ASSOCIATED DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.09.2014 FR 1458332**

(43) Date de publication de la demande:
**12.07.2017 Bulletin 2017/28**

(73) Titulaire: **Renault S.A.S.**
**92100 Boulogne-Billancourt (FR)**

(72) Inventeurs:
- **MALOUM, Abdelmalek**
  **F-94550 Chevilly-larue (FR)**
- **KETFI-CHERIF, Ahmed**
  **F-78990 Elancourt (FR)**

(56) Documents cités:
JP-A- 2003 134 830   US-A1- 2001 029 434
US-A1- 2005 007 061   US-A1- 2007 121 354
US-A1- 2014 001 843

- **Anonymous: "The Feed Forward Controller - Practical Process Control by Control Guru", , 4 mai 2008 (2008-05-04), XP055184442, Extrait de l'Internet: URL:http://www.controlguru.com/2008/050408 .html [extrait le 2015-04-20]**
- **Anonymous: "Integral windup - Wikipedia, the free encyclopedia", , 18 octobre 2010 (2010-10-18), XP055223626, Extrait de l'Internet: URL:https://en.wikipedia.org/w/index.php?t itle=Integral_windup&oldid=350567226[extrait le 2015-10-26]**

**Description**

L'invention concerne la régulation d'un groupe motopropulseur hybride, et plus particulièrement la régulation du groupe motopropulseur lorsque le bloc à haute tension est mis en défaut.

Les constructeurs automobiles recherchent continuellement des solutions technologiques permettant de réduire les émissions de gaz polluant tel que le dioxyde de carbone.

Une solution allant dans ce sens consiste à introduire une machine électrique dans le groupe motopropulseur et de créer ainsi un groupe motopropulseur hybride. Cela permet en effet qu'une partie de l'énergie nécessaire au fonctionnement du véhicule automobile soit fournie par la machine électrique plutôt que par le moteur à combustion interne, et ainsi de réduire les émissions de gaz polluant.

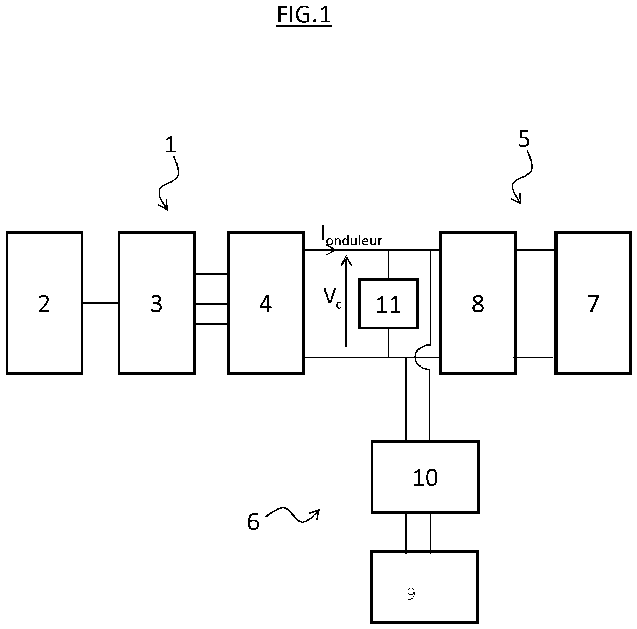

Comme cela est illustré sur la figure 1, un groupe motopropulseur hybride 1 comporte généralement un moteur à combustion interne 2 couplé à une machine électrique 3. La machine électrique 3 est couplée de l'autre côté à un onduleur 4. L'onduleur 4 permet de transformer le courant issu de la machine électrique 3 en un courant convenant au chargement des batteries qui y sont connectées lorsque la machine charge les batteries, mais également d'ajuster le courant issu des batteries à la machine électrique 3 lorsque la machine électrique a besoin d'être alimentée.

Le groupe motopropulseur 1 comprend deux blocs d'alimentation 5 et 6. Un premier bloc d'alimentation 5 à haute tension comprenant une batterie à haute tension 7 couplée à l'onduleur 4 via des moyens de relais 8. Et un second bloc d'alimentation 6 à basse tension comprenant une batterie à basse tension 9 couplée à l'onduleur 4 via un convertisseur de courant continu 10 de type convertisseur courant-continu / courant-continu, dit en anglais DC/DC d'après l'anglais « Direct Current/Direct Current »,et une capacité 11.

La machine électrique 3 et l'onduleur 4 remplacent l'alternateur des groupes motopropulseurs classiques ne comportant pas de machine électrique.

Le système électrotechnique composé des deux blocs d'alimentation 5 et 6 permet, d'une part, d'alimenter le réseau de bord basse tension à 14 V et de redémarrer lors d'une phase dite de « stop/start », c'est-à-dire lorsque le moteur à combustion interne est coupé par le système de contrôle du véhicule automobile pour une courte période entre deux phases de roulage.

Le premier démarrage est toujours assuré par le démarreur conventionnel.

D'autre part, le système électrotechnique permet en outre de réaliser une optimisation énergétique par répartition du couple de traction entre le moteur à combustion interne 2 et la machine électrique 3, de récupérer de l'énergie par freinage récupératif notamment, et d'augmenter le brio, c'est-à-dire la capacité d'accélération supplémentaire du véhicule automobile.

L'invention a pour but de permettre à un véhicule automobile muni d'un groupe motopropulseur hybride de continuer à rouler en cas de défaillance de la batterie à haute tension ou des relais du bloc d'alimentation à haute tension.

Il est connu du document US 2014/001843 un système de commande d'un groupe motopropulseur hybride consistant à court-circuiter le convertisseur de courant continu de manière à s'affranchir du problème de régulation de tension.

Un tel système ne permet pas de s'assurer de l'alimentation correcte des auxiliaires à bord du véhicule puisque la tension n'est pas contrôlée. Par conséquent, le véhicule automobile peut continuer de rouler, mais les auxiliaires électriques risquent de ne pas pouvoir fonctionner ou bien d'être endommagés par l'excès ou le défaut de courant.

L'invention a ici plus particulièrement pour but de réguler la tension aux bornes de la capacité du bloc d'alimentation à basse tension de manière à pouvoir répondre au besoin des auxiliaires qui se trouvent à bord du véhicule automobile sans l'énergie de la batterie du bloc d'alimentation à haute tension.

Selon un aspect de l'invention, il est proposé dans un mode de mise en oeuvre un procédé de régulation d'un groupe motopropulseur hybride d'un véhicule comportant une machine électrique couplée entre un moteur à combustion interne et un onduleur, un premier bloc d'alimentation à un premier niveau de tension couplé à l'onduleur et un second bloc d'alimentation à un second niveau de tension couplé à l'onduleur via une capacité, le premier niveau de tension étant supérieur au second niveau de tension et le second bloc d'alimentation comportant une batterie apte à fournir le second niveau de tension et un convertisseur de courant continu couplé entre la capacité et ladite batterie.

Selon une caractéristique générale de l'invention, le procédé comprend :

- une détermination d'une consigne de courant à délivrer par l'onduleur pour permettre le fonctionnement des systèmes auxiliaires électroniques du véhicule nécessitant une alimentation au second niveau de tension, en fonction d'une mesure du courant délivré par l'onduleur et de la différence entre la tension mesurée aux bornes de la capacité et une consigne de tension à appliquer aux bornes de la capacité,

- une comparaison de la consigne de courant déterminée à une plage de courant à délivrer acceptable, et

- une saturation de la consigne de courant à délivrer par l'onduleur et une transmission à l'onduleur de la consigne saturée si la consigne de courant déterminée est hors de ladite plage de courant, ou

- une transmission de la consigne non saturée si la consigne déterminée est comprise dans ladite plage de courant.

Ce procédé de régulation permet de rejeter la variable exogène de courant correspondant à la demande de courant par le convertisseur de courant continu entre l'onduleur et le convertisseur.

La régulation du courant à l'intérieur d'une plage de courant permet de s'assurer, d'une part, que le courant est suffisamment élevé pour permettre le fonctionnement des systèmes auxiliaires électroniques nécessitant une alimentation au second niveau de tension, et, d'autre part, que le courant est suffisamment faible pour protéger le convertisseur de courant continu.

La saturation de la consigne de courant permet ainsi de maintenir le courant à une de ces valeurs extrémales selon la valeur de la consigne de courant initialement déterminée. Et cela en dépit des appels de courant des systèmes électroniques auxiliaires afin de maintenir le fonctionnement des systèmes auxiliaires et d'éviter une dégradation du convertisseur de courant continu.

Pour cela, de préférence, la plage de courant est définie par une valeur minimale de courant et une valeur maximale de courant, et la saturation comprend une fixation de la consigne de courant à délivrer à la valeur minimale de courant si la consigne de courant déterminée est inférieure à la valeur minimale de courant et une fixation de la consigne de courant à délivrer à la valeur maximale de courant si la consigne de courant déterminée est supérieure à la valeur maximale de courant.

Avantageusement, la détermination de la consigne de courant à délivrer par l'onduleur peut comprendre :

- une réception d'une consigne de tension à appliquer aux bornes de la capacité,
- une mesure de la tension aux bornes de la capacité,
- un calcul de la différence entre ladite consigne de tension aux bornes de la capacité et ladite tension mesurée aux bornes de la capacité,
- une régulation proportionnelle intégrale de la différence de tension calculée pour en déduire une constante de courant de régulation,
- une mesure du courant délivré par l'onduleur, et
- une détermination de la consigne de courant à délivrer par l'onduleur à partir de la somme entre la constante de courant de régulation et le courant délivré par l'onduleur mesuré.

En déterminant ainsi la consigne de courant à délivrer par l'onduleur il est possible de s'affranchir des appels de courant des systèmes électriques auxiliaires.

Avantageusement, la régulation proportionnelle intégrale comprend un calcul d'une composante proportionnelle et un calcul d'une composante intégrale, la composante intégrale n'étant pas prise en compte lorsque la précédente consigne de courant à délivrer par l'onduleur déterminée était hors de la plage de courant à délivrer acceptable, c'est-à-dire lorsque la précédente consigne a été saturée par les moyens de limitations.

La séparation des calculs des deux composantes et la possibilité de s'affranchir de la composante intégrale lorsque la consigne est hors de la plage de courant permettent de désaturer la consigne de courant à délivrer par l'onduleur plus rapidement que si la composante intégrale était continuellement calculée et prise en compte.

Selon un autre aspect de l'invention, il est proposé dans un mode de réalisation, un dispositif de régulation d'un groupe motopropulseur hybride d'un véhicule comportant une machine électrique couplée entre un moteur à combustion interne et un onduleur, un premier bloc d'alimentation à un premier niveau de tension couplé à l'onduleur et un second bloc d'alimentation à un second niveau de tension couplé à l'onduleur via une capacité, le premier niveau de tension étant supérieur au second niveau de tension, et le second bloc comportant une batterie apte à fournir le second niveau de tension et un convertisseur de courant continu couplé entre la capacité et ladite batterie.

Selon une caractéristique générale de cet aspect de l'invention, le dispositif de régulation comprend :

- des moyens de détection d'une mise en défaut du premier bloc d'alimentation,
- un régulateur apte à déterminer une consigne de courant à délivrer par l'onduleur pour permettre le fonctionnement des systèmes auxiliaires électroniques du véhicule nécessitant une alimentation au second niveau de tension, en fonction du courant délivré par l'onduleur et de la différence entre la tension aux bornes de la capacité et la consigne de tension à appliquer aux bornes de la capacité, et
- des moyens de limitation de la consigne aptes à délivrer à l'onduleur une consigne saturée de courant à délivrer par l'onduleur si la consigne déterminée par le régulateur est hors d'une plage de courant à délivrer acceptable ou une consigne non saturée si la consigne déterminée par le régulateur est dans ladite plage de courant.

De préférence, les moyens de limitation de la consigne comprennent un premier comparateur apte à comparer la consigne à une valeur minimale de courant, un second comparateur apte à comparer la consigne à une valeur maximale de courant, et un module de commande apte à fixer la consigne de courant à délivrer à la valeur minimale de courant si la consigne est inférieure à la valeur minimale de courant et à fixer la consigne de courant à délivrer à la valeur maximale de courant si la consigne est supérieure à la valeur maximale de courant et à maintenir la consigne à la valeur déterminée par le régulateur si la consigne est supérieure à la valeur minimale et inférieure à la valeur maximale.

Avantageusement, le régulateur comprend des moyens de réception d'une consigne de tension à appliquer aux bornes de la capacité, des moyens de mesure de la tension aux bornes de la capacité, un soustracteur apte à calculer la différence entre la consigne de tension à appliquer aux bornes de la capacité et la tension mesurée aux bornes de la capacité, un régulateur proportionnel intégral apte à déduire une constante de courant de régulation à partir de la différence calculée par le soustracteur, des moyens de mesure du courant délivré par l'onduleur, et un additionneur apte à déterminer la consigne de courant à délivrer par l'onduleur à partir de la somme entre la constante de courant de régulation et le courant mesuré.

Le régulateur proportionnel intégral peut avantageusement comprendre un premier module apte à calculer une composante proportionnelle et un second module apte à calculer une composante intégrale, le second module étant bloqué lorsque la consigne de courant à délivrer par l'onduleur est hors de la plage de courant à délivrer acceptable.

Selon encore un autre aspect de l'invention, il est proposé un groupe motopropulseur comprenant un dispositif de régulation tel que défini ci-dessus.

D'autres avantages et caractéristiques de l'invention apparaîtront à l'examen de la description détaillée d'un mode de réalisation et d'un mode de mise en oeuvre, nullement limitatifs, et des dessins annexés, sur lesquels :

- la figure 1, déjà décrite, représente schématiquement une architecture classique d'un groupe motopropulseur hybride ;
- la figure 2 présente un organigramme d'un procédé de régulation d'un groupe motopropulseur hybride selon un mode de mise en oeuvre de l'invention ;
- la figure 3 représente schématiquement un dispositif de régulation d'un groupe motopropulseur hybride selon un mode de réalisation de l'invention.

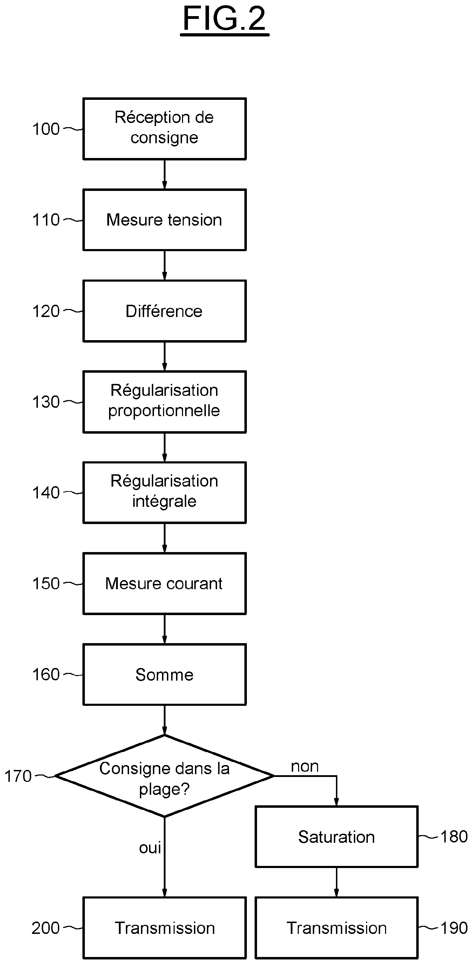

Sur la figure 2 est présenté un organigramme d'un procédé de régulation d'un groupe motopropulseur hybride selon un mode de mise en oeuvre de l'invention.

Le procédé de régulation est mis en oeuvre à la suite de la détection d'une mise en défaut du premier bloc d'alimentation 5 à haute tension du groupe motopropulseur hybride 1. Le procédé de régulation permet de déterminer une consigne de courant à délivrer à l'onduleur 4, lorsque celui-ci fonctionne en générateur de courant pour le convertisseur courant-continu/courant-continu 10. Le courant délivré par l'onduleur $I_{onduleur}$ dans cette demande correspond donc au courant en sortie de l'onduleur fonctionnant en redresseur de courant sur le bus de courant continu aux bornes duquel est positionnée la capacité 11.

Dans une première étape du procédé 100, on réceptionne une consigne de tension à appliquer aux bornes de la capacité 11 du second bloc d'alimentation 6 à basse tension, et on mesure dans le même temps, dans une étape 110, la tension aux bornes de la capacité 11. La consigne de tension de la capacité est comprise entre une tension minimale, par exemple de 36 V, et une tension maximale, par exemple de 49 V. On peut prendre par exemple la tension moyenne, de 42,5 V dans l'exemple présenté.

Dans une étape suivante 120, on calcule la différence entre la consigne reçue à l'étape 100 et la tension mesurée à l'étape 110.

On réalise ensuite, dans une étape 130, une régulation de type proportionnel sur la différence de tension calculée à l'étape 120.

Dans le même temps que l'étape 130, on vérifie si la consigne de courant précédemment déterminée a été saturée ou non, et si elle n'a pas été saturée, on réalise dans une étape 140 une régulation de type intégral sur la différence de tension calculée à l'étape 120. Sinon, c'est-à-dire si la consigne de courant précédemment déterminée a été saturée, la composante intégrale issue de l'étape 140 est mise à zéro ; c'est-à-dire que la valeur de la composante intégrale est mise à zéro.

Puis, on mesure, dans une étape 150, le courant délivré par l'onduleur 4, et on détermine, dans une étape 160, une consigne de courant à délivrer par l'onduleur en réalisant la somme entre le courant mesuré à l'étape 150, la composante proportionnelle issue de la régulation de type proportionnel de l'étape 130 et la composante intégrale issue de l'étape 140. On nomme la somme entre la composante proportionnelle et la composante intégrale, la constante de régulation du système.

Dans une étape suivante 170, on compare la consigne de courant déterminée à l'étape 160 à une plage de courant à délivrer acceptable. La plage de courant est définie par une valeur minimale de courant et une valeur maximale de courant.

Si la consigne de courant à délivrer par l'onduleur 4 déterminée à l'étape 160 est hors de ladite plage de courant, on sature, dans une étape 180, la consigne de courant déterminée à l'étape 160 et on transmet la consigne saturée à l'onduleur 4 dans une étape 190.

Pour saturer la consigne de courant à délivrer déterminée à l'étape 160, on fixe la consigne de courant à délivrer à la valeur minimale de courant si la consigne déterminée à l'étape 160 est inférieure à la valeur minimale de courant de manière à permettre le fonctionnement des systèmes auxiliaires électroniques nécessitant une alimentation à basse tension. Si, au contraire, la consigne déterminée à l'étape 160 est supérieure à la valeur maximale de courant, on fixe la consigne de courant à délivrer à la valeur maximale de courant de manière à maintenir le courant à un courant suffisamment faible pour protéger le convertisseur de courant continu 10.

Si, à l'issue de la comparaison de l'étape 170, il est vérifié que la consigne déterminée est dans ladite plage de courant, on transmet, dans une étape 200, la consigne non saturée.

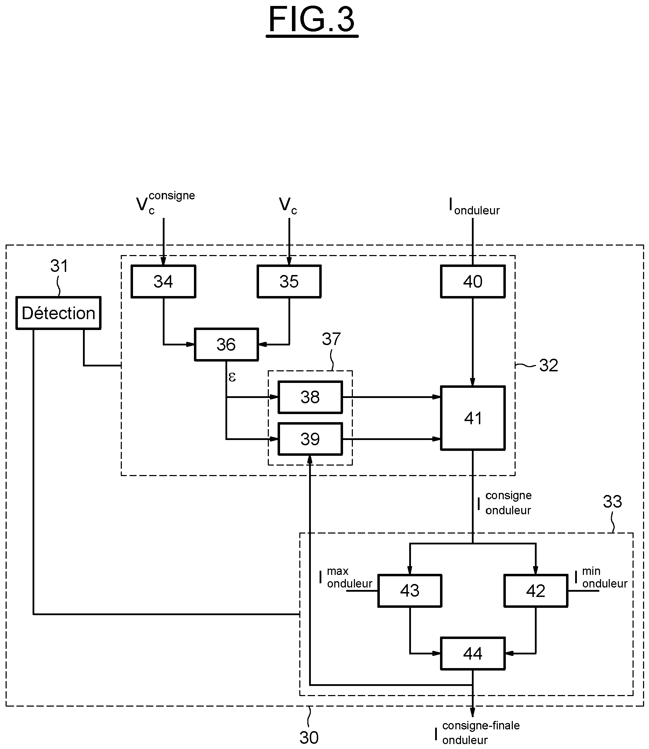

Sur la figure 3 est illustré de manière schématique un dispositif 30 de régulation d'un groupe motopropulseur hybride 1 selon un mode de réalisation de l'invention.

Le groupe motopropulseur hybride 1 correspond à celui décrit sur la figure 1.

Le dispositif 30 de régulation est apte à mettre en oeuvre le procédé de régulation présenté sur la figure 2. Le dispositif 30 de régulation comprend des moyens de détection 31 d'une mise en défaut du bloc d'alimentation 5 à haute tension, un régulateur 32 et des moyens de limitation 33. Les moyens de détection 31 sont couplés au régulateur 32 et aux moyens de limitation 33 et sont configurés pour actionner le régulateur 32 et les moyens de limitation 33 dès qu'une mise en défaut du bloc d'alimentation 5 à haute tension est détectée.

Le régulateur 32 est configuré pour déterminer une consigne de courant à délivrer par l'onduleur 4 en fonction du courant réellement délivré par l'onduleur 4 et de la différence entre la tension mesurée aux bornes de la capacité 11 et la consigne de tension à appliquer aux bornes de la capacité 11.

Le régulateur 32 comprend des moyens 34 de réception d'une consigne $V_C^{consigne}$ de tension à appliquer aux bornes de la capacité 11, un capteur de tension 35 apte à mesurer la tension $V_C$ aux bornes de la capacité 11, et un soustracteur 36. Le soustracteur 36 reçoit en entrée la consigne de tension $V_C^{consigne}$ reçue par les moyens de réception 34 et la valeur de la tension mesurée $V_C$ par le capteur de tension 35. Le soustracteur 36 délivre en sortie une variable de régulation ε résultant du calcul de différence entre la consigne de tension $V_C^{consigne}$ et la tension mesurée $V_C$.

Le régulateur 32 comprend en outre des moyens de régulation 37 de type proportionnel intégral couplés à la sortie du soustracteur 36. Les moyens de régulation 37 comprennent un module de régulation proportionnelle 38 apte à déterminer une composante proportionnelle à partir de la variable de régulation ε délivrée par le soustracteur 36. Les moyens de régulation 37 comprennent également un module de régulation intégrale 39 apte à déterminer une composante intégrale à partir de la variable de régulation ε délivrée par le soustracteur 36.

Le régulateur 32 comprend en outre un capteur de courant 40 apte à mesurer le courant délivré par l'onduleur 4, et un additionneur 41 apte à déterminer une consigne de courant $I_{onduleur}^{consigne}$ à délivrer par l'onduleur 4 à partir de la somme entre le courant mesuré par le capteur de courant 40, la composante proportionnelle délivrée par le module de régulation proportionnelle 38 et la composante intégrale délivrée par la composante de régulation intégrale 39.

Les moyens de limitation 33 de la consigne sont configurés pour délivrer à l'onduleur une consigne saturée de courant à délivrer par l'onduleur si la consigne déterminée par le régulateur est hors d'une plage de courant à délivrer acceptable ou une consigne non saturée si la consigne déterminée par le régulateur est dans ladite plage de courant.

Les moyens de limitation 33 de la consigne comprennent un premier comparateur 42 et un second comparateur 43 couplés à la sortie de l'additionneur 41 du régulateur 32. Le premier comparateur 42 est configuré pour comparer la consigne $I_{onduleur}^{consigne}$ délivrée par l'additionneur 41 à une valeur minimale de courant $I_{onduleur}^{min}$, et le second comparateur 43 est configuré pour comparer la consigne $I_{onduleur}^{consigne}$ délivrée par l'additionneur 41 à une valeur maximale de courant $I_{onduleur}^{max}$.

Les moyens de limitation comprennent en outre des moyens de commande 44 couplés en sortie du premier comparateur 42 et du second comparateur 43. Les moyens de commande sont configurés pour soit fixer la consigne de courant finale à délivrer $I_{onduleur}^{consigne-finale}$ à la valeur minimale de courant $I_{onduleur}^{min}$ si la consigne de courant $I_{onduleur}^{consigne}$ délivrée par l'additionneur 41 du régulateur 32 est inférieure à la valeur minimale de courant $I_{onduleur}^{min}$, soit fixer la consigne de courant finale à délivrer $I_{onduleur}^{consigne-finale}$ à la valeur maximale de courant $I_{onduleur}^{max}$ si la consigne de courant $I_{onduleur}^{consigne}$ délivrée par l'additionneur 41 du régulateur 32 est supérieure à la valeur maximale de courant $I_{onduleur}^{max}$, soit maintenir la consigne de courant $I_{onduleur}^{consigne}$ à la valeur déterminée par le régulateur 32, c'est-à-dire fixer la consigne de courant finale à délivrer $I_{onduleur}^{consigne-finale}$ à la valeur de la consigne déterminée par le régulateur 32, si la consigne de courant $I_{onduleur}^{consigne}$ délivrée par l'additionneur 41 du régulateur 32 est supérieure à la valeur minimale $I_{onduleur}^{min}$ et inférieure à la valeur maximale $I_{onduleur}^{max}$.

La sortie des moyens de commande 44 des moyens de limitation 33 est couplée au module de régulation intégrale 39 du régulateur 32. De cette manière, le module de régulation intégrale 39 reçoit la valeur de la consigne de courant finale à délivrer $I_{onduleur}^{consigne-finale}$ précédente pour déterminer si la régulation de type intégrale doit être prise en compte pour déterminer la consigne de courant $I_{onduleur}^{consigne}$ suivante. Lorsque la consigne de courant précédente a été saturée, c'est-à-dire lorsque la consigne de courant à délivrer par l'onduleur 4 était hors de la plage de courant à délivrer acceptable définie par la valeur minimale de courant $I_{onduleur}^{\min}$ et la valeur maximale de courant $I_{onduleur}^{\max}$, le module de régulation intégrale 39 est bloqué de sorte que la composante intégrale délivrée est nulle ou non délivrée, et n'intervient donc pas dans la somme réalisée par l'additionneur 41.

L'invention permet ainsi de réguler la tension aux bornes de la capacité du bloc d'alimentation à basse tension de manière à pouvoir répondre au besoin des auxiliaires qui se trouvent à bord du véhicule automobile sans l'énergie de la batterie du bloc d'alimentation à haute tension.

**Revendications**

1. Procédé de régulation d'un groupe motopropulseur hybride (1) d'un véhicule, comportant une machine électrique (3) couplée entre un moteur à combustion interne (2) et un onduleur (4), un premier bloc d'alimentation (5) à un premier niveau de tension couplé à l'onduleur (4) et un second bloc d'alimentation (6) à un second niveau de tension couplé à l'onduleur (4) via une capacité (11), le premier niveau de tension étant supérieur au second niveau de tension et le second bloc d'alimentation (6) comportant une batterie (9) apte à fournir le second niveau de tension et un convertisseur de courant continu (10) couplé entre la capacité (11) et ladite batterie (9), **caractérisé en ce que**, lorsque le premier bloc d'alimentation (5) est défaillant, le procédé comprend :

    - une détermination d'une consigne de courant à délivrer par l'onduleur (4) pour permettre le fonctionnement des systèmes auxiliaires électroniques du véhicule nécessitant une alimentation au second niveau de tension, en fonction d'une mesure du courant ($I_{onduleur}$) délivré par l'onduleur (4) et de la différence entre une tension ($V_C$) mesurée aux bornes de la capacité (11) et une consigne ($V_C^{consigne}$) de tension à appliquer aux bornes de la capacité (11),
    - une comparaison (170) de la consigne de courant déterminée à une plage de courant à délivrer acceptable, et
    - une saturation (180) de la consigne de courant à délivrer par l'onduleur (4) et une transmission (190) à l'onduleur (4) de la consigne saturée si la consigne de courant déterminée est hors de ladite plage de courant, ou
    - une transmission (200) de la consigne non saturée si la consigne déterminée est comprise dans ladite plage de courant.

2. Procédé selon la revendication 1, dans lequel la plage de courant est définie par une valeur minimale de courant ($I_{onduleur}^{\min}$) et une valeur maximale de courant ($I_{onduleur}^{\max}$), et la saturation (180) comprend une fixation de la consigne de courant à délivrer à la valeur minimale de courant ($I_{onduleur}^{\min}$) si la consigne de courant déterminée est inférieure à la valeur minimale de courant ($I_{onduleur}^{\min}$) et une fixation de la consigne de courant à délivrer à la valeur maximale de courant ($I_{onduleur}^{\max}$) si la consigne de courant déterminée est supérieure à la valeur maximale de courant ($I_{onduleur}^{\max}$).

3. Procédé selon l'une des revendications 1 ou 2, dans lequel la détermination de la consigne de courant à délivrer par l'onduleur comprend :

    - une réception (100) d'une consigne ($V_C^{consigne}$) de tension à appliquer aux bornes de la capacité (11),
    - une mesure (110) de la tension ($V_C$) aux bornes de la capacité (11),
    - un calcul (120) de la différence ($\varepsilon$) entre ladite consigne ($V_C^{consigne}$) de tension à appliquer aux bornes de la capacité (11) et ladite tension ($V_C$) mesurée aux bornes de la capacité (11),
    - une régulation proportionnelle intégrale (130 et 140) de la différence de tension calculée ($\varepsilon$) pour en déduire une constante de courant de régulation,
    - une mesure (150) du courant ($I_{onduleur}$) délivré par l'onduleur (4), et
    - une détermination (160) de la consigne de courant à délivrer par l'onduleur (4) à partir de la somme entre la constante de courant de régulation et le courant ($I_{onduleur}$) délivré par l'onduleur mesuré.

4. Procédé selon la revendication 3, dans lequel la régulation proportionnelle intégrale (140 et 150) comprend un calcul (140) d'une composante proportionnelle et un calcul (150) d'une composante intégrale, la composante intégrale n'étant pas prise en compte lorsque la consigne précédente de courant à délivrer par l'onduleur est hors de la plage de courant à délivrer acceptable.

5. Dispositif de régulation (30) d'un groupe motopropulseur hybride (1) d'un véhicule, comportant une machine électrique (3) couplée entre un moteur à combustion interne (2) et un onduleur (4), un premier bloc d'alimentation (5) à un premier niveau de tension couplé à l'onduleur (4) et un second bloc d'alimentation (6) à un second niveau de tension couplé à l'onduleur (4) via une capacité (11), le premier niveau de tension étant supérieur au second niveau de tension et le second bloc d'alimentation (6) comportant une batterie (9) apte à fournir le second niveau de tension et un convertisseur de courant continu (10) couplé entre la capacité (11) et ladite batterie (9), **caractérisé en ce que** le dispositif de régulation (30) comprend :

- des moyens de détection (31) d'une mise en défaut du premier bloc d'alimentation (5),
- un régulateur (32) apte à déterminer une consigne de courant à délivrer par l'onduleur (4) pour permettre le fonctionnement des systèmes auxiliaires électroniques du véhicule nécessitant une alimentation au second niveau de tension, en fonction du courant délivré ($I_{onduleur}$) par l'onduleur (4) et de la différence entre la tension aux bornes de la capacité ($V_C$) et la consigne

$$\left( V_C^{consigne} \right)$$ de tension à appliquer aux bornes de la capacité (11), et

- des moyens de limitation (33) de la consigne aptes à délivrer à l'onduleur (4) une consigne saturée de courant à délivrer par l'onduleur (4) si la consigne déterminée par le régulateur (32) est hors d'une plage de courant à délivrer acceptable ou une consigne non saturée si la consigne déterminée par le régulateur (32) est dans ladite plage de courant.

6. Dispositif de régulation (30) selon la revendication 5, dans lequel les moyens de limitation (33) de la consigne comprennent un premier comparateur (42) apte à comparer la consigne à une valeur minimale de courant $\left( I_{onduleur}^{min} \right)$, un second comparateur (43) apte à comparer la consigne à une valeur maximale de courant $\left( I_{onduleur}^{max} \right)$, et un module de commande (44) apte à fixer la consigne de courant à délivrer à la valeur minimale de courant $\left( I_{onduleur}^{min} \right)$ si la consigne est inférieure à la valeur minimale de courant $\left( I_{onduleur}^{min} \right)$ et à fixer la consigne de courant à délivrer à la valeur maximale de courant si la consigne est supérieure à la valeur maximale de courant $\left( I_{onduleur}^{max} \right)$ et à maintenir la consigne à la valeur déterminée par le régulateur (32) si la consigne est supérieure à la valeur minimale $\left( I_{onduleur}^{min} \right)$ et inférieure à la valeur maximale $\left( I_{onduleur}^{max} \right)$.

7. Dispositif de régulation (30) selon l'une des revendications 5 ou 6, dans lequel le régulateur (32) comprend des moyens (34) de réception d'une consigne de tension à appliquer aux bornes de la capacité (11), des moyens (35) de mesure de la tension aux bornes de la capacité (11), un soustracteur (36) apte à calculer la différence entre la consigne de tension à appliquer aux bornes de la capacité (11) et la tension mesurée ($V_C$) aux bornes de la capacité (11), un régulateur proportionnel intégral (37) apte à déduire une constante de courant de régulation à partir de la différence calculée par le soustracteur (36), des moyens (40) de mesure du courant ($I_{onduleur}$) délivré par l'onduleur (4), et un additionneur (41) apte à déterminer la consigne de courant à délivrer par l'onduleur (4) à partir de la somme entre la constante de courant de régulation et le courant mesuré ($I_{onduleur}$).

8. Dispositif de régulation (30) selon la revendication 7, dans lequel le régulateur proportionnel intégral (37) comprend un premier module (38) apte à calculer une composante proportionnelle et un second module (39) apte à calculer une composante intégrale, le second module (39) étant bloqué lorsque la consigne précédente de courant à délivrer par l'onduleur (4) est hors de la plage de courant à délivrer acceptable.

9. Groupe motopropulseur comprenant un dispositif de régulation (30) selon l'une des revendications 5 à 8.

**Patentansprüche**

1. Verfahren zum Regulieren einer Hybridantriebsgruppe (1) eines Fahrzeugs, die eine elektrische Maschine (3), die zwischen eine Brennkraftmaschine (2) und einen Wechselrichter (4) gekoppelt ist, einen ersten Versorgungsblock (5) mit einem ersten Spannungspegel, der mit dem Wechselrichter (4) gekoppelt ist, und einen zweiten Versorgungsblock (6) mit einem zweiten Spannungspegel, der über einen Kondensator (11) mit dem Wechselrichter (4) gekoppelt ist, enthält, wobei der erste Spannungspegel höher als der zweite Spannungspegel ist und der zweite Versorgungsblock (6) eine Batterie (9), die zum Liefern des zweiten Spannungspegels ausgelegt ist, und einen Gleichstromumsetzer (10), der zwischen dem Kondensator (11) und der Batterie (9) gekoppelt ist, aufweist, **dadurch gekennzeichnet, dass** dann, wenn der erste Versorgungsblock (5) schwach ist, das Verfahren Folgendes umfasst:

- Bestimmen eines Stromsollwertes, der durch den Wechselrichter (4) geliefert werden soll, um den Betrieb der elektronischen Hilfssysteme des Fahrzeugs zu ermöglichen, die eine Versorgung mit dem zweiten Spannungspegel benötigen, entsprechend einem Stromwert ($I_{onduleur}$), der durch den Wechselrichter (4) geliefert wird, und der Differenz zwischen einer Spannung ($V_C$), die an den Anschlüssen des Kondensators (11) gemessen wird, und einem Spannungssollwert ($V_C^{consigne}$), der an die Anschlüsse des Kondensators (11) angelegt werden soll,
- Vergleichen (170) des bestimmten Stromsollwertes mit einem zulässigen Bereich des zu liefernden Stroms, und
- Sättigen (180) des Stromsollwertes, der durch den Wechselrichter (4) geliefert werden soll, und Übertragen (190) des gesättigten Sollwertes an den Wechselrichter (4), wenn der bestimmte Stromsollwert außerhalb des Strombereichs liegt, oder
- Übertragen (200) des nicht gesättigten Sollwertes, wenn der bestimmte Sollwert in dem Strombereich enthalten ist.

2. Verfahren nach Anspruch 1, wobei der Strombereich durch einen Minimalwert des Stroms ($I_{onduleur}^{min}$) und einen Maximalwert des Stroms ($I_{onduleur}^{max}$) definiert ist und die Sättigung (180) eine Festlegung des zu liefernden Stromsollwertes auf den Minimalwert des Stroms ($I_{onduleur}^{min}$), wenn der bestimmte Stromsollwert niedriger als der Minimalwert des Stroms ($I_{onduleur}^{min}$) ist, und eine Festlegung des zu liefernden Stromsollwertes auf den Maximalwert des Stroms ($I_{onduleur}^{max}$), wenn der bestimmte Stromsollwert höher als der Maximalwert des Stroms ($I_{onduleur}^{max}$) ist, umfasst.

3. Verfahren nach einem der Ansprüche 1 oder 2, wobei das Bestimmen des Stromsollwertes, der durch den Wechselrichter geliefert werden soll, Folgendes umfasst:

- Empfangen (100) eines Spannungssollwertes ($V_C^{consigne}$), der an die Anschlüsse des Kondensators (11) angelegt werden soll,
- Messen (110) der Spannung ($V_C$) an den Anschlüssen des Kondensators (11),
- Berechnen (120) der Differenz ($\varepsilon$) zwischen dem Spannungssollwert ($V_C^{consigne}$), der an die Anschlüsse des Kondensators (11) angelegt werden soll, und der Spannung ($V_C$), die an den Anschlüssen des Kondensators (11) gemessen wird,
- proportional-integrales Regulieren (130 und 140) der berechneten Spannungsdifferenz ($\varepsilon$), um eine Regulierungsstromkonstante abzuleiten,
- Messen (150) des Stroms ($I_{onduleur}$), der durch den Wechselrichter (4) geliefert wird, und
- Bestimmen (160) des Stromsollwertes, der durch den Wechselrichter (4) geliefert werden soll, auf der Grundlage der Summe zwischen der Regulierungsstromkonstante und dem gemessenen Strom ($I_{onduleur}$), der durch den Wechselrichter geliefert wird.

4. Verfahren nach Anspruch 3, wobei das proportionalintegrale Regulieren (140 und 150) ein Berechnen (140) einer proportionalen Komponente und ein Berechnen (150) einer integralen Komponente umfasst, wobei die integrale Komponente nicht berücksichtigt wird, wenn der vorhergehende Stromsollwert, der durch den Wechselrichter geliefert werden soll, außerhalb des zulässigen Bereichs des zu liefernden Stroms liegt.

5. Regulierungsvorrichtung (30) einer Hybridantriebsgruppe (1) eines Fahrzeugs, die eine elektrische Maschine (3), die zwischen eine Brennkraftmaschine (2) und einen Wechselrichter (4) gekoppelt ist, einen ersten Versorgungsblock (5) mit einem ersten Spannungspegel, der mit dem Wechselrichter (4) gekoppelt ist, und einen zweiten Versorgungsblock (6) mit einem zweiten Spannungspegel, der über einen Kondensator (11) mit dem Wechselrichter (4) gekoppelt ist, aufweist, wobei der erste Spannungspegel höher als der zweite Spannungspegel ist und der zweite Versorgungsblock (6) eine Batterie (9), die zum Liefern des zweiten Spannungspegels ausgelegt ist, und einen Gleichstromumsetzer (10), der zwischen den Kondensator (11) und die Batterie (9) gekoppelt ist, aufweist, **dadurch gekennzeichnet, dass** die Regulierungsvorrichtung (30) Folgendes umfasst:

- Mittel zur Detektion (31) eines Auftretens eines Fehlers des ersten Versorgungsblocks (5),
- eine Regulierungseinrichtung (32), die ausgelegt ist, einen Stromsollwert zu bestimmen, der durch den Wechselrichter (4) geliefert werden soll, um den Betrieb der elektronischen Hilfssysteme des Fahrzeugs zu ermöglichen, die eine Versorgung mit dem zweiten Spannungspegel benötigen, entsprechend dem Stromwert (I$_{onduleur}$), der durch den Wechselrichter (4) geliefert wird, und der Differenz zwischen einer Spannung (V$_C$) an den Anschlüssen des Kondensators (11) und einem Spannungssollwert ( $V_C^{consigne}$ ) , der an die Anschlüsse des Kondensators (11) angelegt werden soll, und
- Mittel (33) zur Begrenzung des Sollwertes, die ausgelegt sind, an den Wechselrichter (4) einen gesättigten Stromsollwert, der durch den Wechselrichter (4) geliefert werden soll, wenn der Sollwert, der durch die Regulierungseinrichtung (32) bestimmt wird, außerhalb eines zulässigen Bereichs des zu liefernden Stroms liegt, oder einen nicht gesättigten Sollwert, wenn der Sollwert, der durch die Regulierungseinrichtung (32) bestimmt wird, in dem Sollwertbereich liegt, zu liefern.

6. Regulierungsvorrichtung (30) nach Anspruch 5, wobei die Mittel (33) zur Begrenzung des Sollwertes einen ersten Komparator (42), der ausgelegt ist, den Sollwert mit einem Minimalwert des Stroms ( $I_{onduleur}^{min}$ ) zu vergleichen, einen zweiten Komparator (43), der ausgelegt ist, den Sollwert mit einem Maximalwert des Stroms ( $I_{onduleur}^{max}$ ) zu vergleichen, und ein Steuermodul (44), das ausgelegt ist, den zu liefernden Stromsollwert auf den Minimalwert des Stroms ( $I_{onduleur}^{min}$ ) festzulegen, wenn der Sollwert niedriger als der Minimalwert des Stroms ( $I_{onduleur}^{min}$ ) ist, und den zu liefernden Stromsollwert auf den Maximalwert des Stroms ( $I_{onduleur}^{max}$ ) festzulegen, wenn der Sollwert höher als der Maximalwert des Stroms ( $I_{onduleur}^{max}$ ) ist, und den Sollwert bei dem Wert aufrechtzuerhalten, der durch die Regulierungseinrichtung (32) bestimmt wird, wenn der Sollwert höher als der Minimalwert ( $I_{onduleur}^{min}$ ) und niedriger als der Maximalwert ( $I_{onduleur}^{max}$ ) ist.

7. Regulierungsvorrichtung (30) nach einem der Ansprüche 5 oder 6, wobei die Regulierungseinrichtung (32) Mittel (34) zum Empfang eines Spannungssollwertes, der an die Anschlüsse des Kondensators (11) angelegt werden soll, Mittel (35) zum Messen der Spannung an den Anschlüssen des Kondensators (11), eine Subtraktionseinrichtung (36), die ausgelegt ist, die Differenz zwischen dem Spannungssollwert, der an die Anschlüsse des Kondensators (11) angelegt werden soll, und der gemessenen Spannung (V$_C$) an den Anschlüssen des Kondensators (11) zu berechnen, eine Einrichtung (37) zur proportional-integralen Regulierung, die ausgelegt ist, auf der Grundlage der Differenz, die durch die Subtraktionseinrichtung (26) berechnet wird, eine Stromregulierungskonstante abzuleiten, Mittel (40) zum Messen des Stroms (I$_{onduleur}$), der durch den Wechselrichter (4) geliefert wird, und eine Additionseinrichtung (41), die ausgelegt ist, den Stromsollwert, der durch den Wechselrichter (4) geliefert werden soll, auf der Grundlage der Summe zwischen der Stromregulierungskonstante und dem gemessenen Strom (I$_{onduleur}$) zu bestimmen, umfasst.

8. Regulierungsvorrichtung (30) nach Anspruch 7, wobei die Einrichtung (37) zur proportional-integralen Regulierung ein erstes Modul (38), das ausgelegt ist, eine proportionale Komponente zu berechnen, und ein zweites Modul (39), das ausgelegt ist, eine integrale Komponente zu berechnen, umfasst, wobei das zweite Modul (39) gesperrt ist, wenn der vorhergehende Stromsollwert, der durch den Wechselrichter (4) zu liefern ist, außerhalb des zulässigen Bereiches des zu liefernden Stroms liegt.

9. Antriebsgruppe, die eine Regulierungsvorrichtung (30) nach einem der Ansprüche 5 bis 8 umfasst.

**Claims**

1. Method for controlling a hybrid powertrain (1) of a vehicle, including an electrical machine (3) coupled between an internal combustion engine (2) and an inverter (4), a first power supply block (5) at a first voltage level coupled to the inverter (4) and a second power supply block (6) at a second voltage level coupled to the inverter (4) via a capacitor (11), the first voltage level being higher than the second voltage level and the second power supply block (6) including a battery (9) able to supply the second voltage level and a DC current converter (10) coupled between the capacitor (11) and said battery (9), **characterized in that**, when the first power supply block (5) is defective, the method comprises:

- determining a current setpoint to be delivered by the inverter (4) so as to allow the operation of the auxiliary electronic systems of the vehicle requiring a supply of power at the second voltage level, as a function of a measurement of the current (I$_{inverter}$) delivered by the inverter (4) and of the difference between a voltage (V$_C$) measured across the terminals of the capacitor (11) and a voltage setpoint $(V_C^{setpoint})$ to be applied to the terminals of the capacitor (11),
- comparing (170) the determined current setpoint with an acceptable current range to be delivered, and
- saturating (180) the current setpoint to be delivered by the inverter (4) and transmitting (190) the saturated setpoint to the inverter (4) if the determined current setpoint is outside of said current range, or
- transmitting (200) the non-saturated setpoint if the determined setpoint is within said current range.

2. Method according to Claim 1, wherein the current range is defined by a minimum current value $(I_{inverter}^{\min})$ and a maximum current value $(I_{inverter}^{\max})$, and the saturation (180) comprises setting the current setpoint to be delivered to the minimum current value $(I_{inverter}^{\min})$ if the determined current setpoint is lower than the minimum current value $(I_{inverter}^{\min})$ and setting the current setpoint to be delivered to the maximum current value $(I_{inverter}^{\max})$ if the determined current setpoint is higher than the maximum current value $(I_{inverter}^{\max})$.

3. Method according to either of Claims 1 and 2, wherein determining the current setpoint to be delivered by the inverter comprises:

- receiving (100) a voltage setpoint $(V_C^{setpoint})$ to be applied to the terminals of the capacitor (11),
- measuring (110) the voltage $(V_C)$ across the terminals of the capacitor (11),
- calculating (120) the difference ($\varepsilon$) between said voltage setpoint $(V_C^{setpoint})$ to be applied to the terminals of the capacitor (11) and said voltage $(V_C)$ measured across the terminals of the capacitor (11),
- proportionally integrally controlling (130 and 140) the calculated voltage difference ($\varepsilon$) so as to deduce a control current constant therefrom,
- measuring (150) the current ($I_{inverter}$) delivered by the inverter (4), and
- determining (160) the current setpoint to be delivered by the inverter (4) from the sum of the control current constant and the measured current ($I_{inverter}$) delivered by the inverter.

4. Method according to Claim 3, wherein the proportional integral control (140 and 150) comprises calculating (140) a proportional component and calculating (150) an integral component, the integral component not being taken into account when the previous current setpoint to be delivered by the inverter is outside of the acceptable current range to be delivered.

5. Device (30) for controlling a hybrid powertrain (1) of a vehicle, including an electrical machine (3) coupled between an internal combustion engine (2) and an inverter (4), a first power supply block (5) at a first voltage level coupled to the inverter (4) and a second power supply block (6) at a second voltage level coupled to the inverter (4) via a capacitor (11), the first voltage level being higher than the second voltage level and the second power supply block (6) including a battery (9) able to supply the second voltage level and a DC current converter (10) coupled between the capacitor (11) and said battery (9), **characterized in that** the control device (30) comprises:

- means (31) for detecting failure of the first power supply block (5),
- a controller (32) able to determine a current setpoint to be delivered by the inverter (4) so as to allow the operation of the auxiliary electronic systems of the vehicle requiring a supply of power at the second voltage level, as a function of the current ($I_{inverter}$) delivered by the inverter (4) and of the difference between the voltage ($V_C$) across the terminals of the capacitor and the voltage setpoint $(V_C^{setpoint})$ to be applied to the terminals of the capacitor (11),
- means (33) for limiting the setpoint, able to deliver, to the inverter (4), a saturated current setpoint to be delivered by the inverter (4) if the setpoint determined by the controller (32) is outside of an acceptable current range to be delivered or a non-saturated setpoint if the setpoint determined by the controller (32) is within said current range.

6. Control device (30) according to Claim 5, wherein the means (33) for limiting the setpoint comprise a first comparator (42) able to compare the setpoint with a minimum current value $(I_{inverter}^{\min})$, a second comparator (43) able to compare the setpoint with a maximum current value $(I_{inverter}^{\max})$, and a control module (44) able to set the current setpoint to be delivered to the minimum current value $(I_{inverter}^{min})$ if the setpoint is lower than the minimum current value $(I_{inverter}^{min})$ and to set the current setpoint to be delivered to the maximum current value $(I_{inverter}^{max})$ if the setpoint is higher than the maximum current value $(I_{inverter}^{max})$, and to keep the setpoint at the value determined by the controller (32) if the setpoint is higher than the minimum value $(I_{inverter}^{min})$ and lower than the maximum value $(I_{inverter}^{max})$.

7. Control device (30) according to either of Claims 5 and 6, wherein the controller (32) comprises means (34) for receiving a voltage setpoint to be applied to the terminals of the capacitor (11), means (35) for measuring the voltage across the terminals of the capacitor (11), a subtractor (36) able to calculate the difference between the voltage setpoint to be applied to the terminals of the capacitor (11) and the measured voltage ($V_C$) across the terminals of the capacitor (11), a proportional integral controller (37) able to deduce a control current constant from the difference calculated by the subtractor (36), means (40) for measuring the current ($I_{inverter}$) delivered by the inverter (4), and an adder (41) able to determine the current setpoint to be delivered by the inverter (4) from the sum of the control current constant and the measured current ($I_{inverter}$).

8. Control device (30) according to Claim 7, wherein the proportional integral controller (37) comprises a first module (38) able to calculate a proportional component and a second module (39) able to calculate an integral component, the second module (39) being blocked when the previous current setpoint to be delivered by the inverter (4) is outside of the acceptable current range to be delivered.

9. Drivetrain comprising a control device (30) according to one of Claims 5 to 8.

FIG.1

$I_{onduleur}$

$V_c$

1

2    3    4    11    8    7

5

6

10

9

# FIG.2

100 — Réception de consigne

110 — Mesure tension

120 — Différence

130 — Régularisation proportionnelle

140 — Régularisation intégrale

150 — Mesure courant

160 — Somme

170 — Consigne dans la plage?

non

180 — Saturation

oui

200 — Transmission

190 — Transmission

# FIG.3

**RÉFÉRENCES CITÉES DANS LA DESCRIPTION**

**Documents brevets cités dans la description**

- US 2014001843 A